# EUROPEAN PATENT SPECIFICATION

(11) **EP 3 405 045 B1**
(45) Date of publication and mention of the grant of the patent: **11.08.2021**
(21) Application number: 16714639.8
(22) Date of filing: 14.03.2016
(51) Int. Cl.: A23L 3/375

(54) **METHOD FOR CRYOGENICALLY COOLING FOOD PRODUCT**
VERFAHREN ZUR KRYOGENEN KÜHLUNG EINES LEBENSMITTELPRODUKTS
PROCÉDÉ DE REFROIDISSEMENT CRYOGÉNIQUE DE PRODUIT ALIMENTAIRE

(30) Priority: 20.01.2016 US 201662280907 P
(43) Date of publication of application: 28.11.2018
(73) Proprietor: Praxair Technology, Inc., Danbury, CT 06810 (US)
(72) Inventor: ISRANI, Sameer, Darien, IL 60561 (US); HUNEK, Balazs, Western Spring, IL 60558 (US); GIRARD, John, M., Downers Grove, IL 60515 (US)
(74) Representative: BRP Renaud & Partner mbB Rechtsanwälte Patentanwälte Steuerberater
(86) International application number: PCT/US2016/022244
(87) International publication number: WO 2017/127125

(56) References cited:
- EP-A1- 2 158 814
- US-A- 5 520 005
- US-A- 6 026 648
- US-A1- 2004 255 599
- US-A1- 2006 283 195
- US-A1- 2012 255 315

## Description

### Field of the Invention

The present invention relates to equipment and methods for cooling food products such as ground meat.

### Background of the Invention

In the commercial-scale preparation of food products, there can be stages in which the temperature of the food product increases and should be decreased. Lower temperatures are desirable to maintain the food products in sanitary condition, to avoid degradation of the physical characteristics of the food product, and to improve its processability and final product yield in subsequent unit operations. For example, the cutting and grinding operations that are performed in the production of ground meat may be expected to raise the temperature of the resulting ground meat product, and reducing the temperature of the ground meat product is highly desirable as soon as possible during or following the formation of the ground meat product.

US 2006/283195 A1 discloses a system for cooling a pumpable material comprising an inline continuous mechanical mixer having a feed inlet, a liquid cryogen inlet, and a cooled product outlet; a cryogenic liquid delivery and injection system adapted to introduce a liquid cryogen into the liquid cryogen inlet; and a feed pump adapted to introduce the pumpable material into the feed inlet.

Further methods for cooling food products are shown in US 5520005 and in US 6026648.

Prior techniques for cooling food products have encountered drawbacks such as nonuniformity of cooling, as well as freezing of portions of the food product. Also, prior techniques that use cryogenic coolant are costly in that they consume considerable amounts of the coolant as well as energy and time for a given amount of cooling.

The present invention provides a system for cooling food product that avoids nonuniformity and freezing of the food product, while realizing unexpected efficiencies in cryogenic coolant and in time and energy requirements.

### Brief Summary of the Invention

The present invention is a method for providing a desired amount of cooling to a quantity of food product in a vessel within a given period of time as it is defined in claim 1.

Preferred embodiments of the present invention are defined in the dependent claims.

### Brief Description of the Drawings

Figure 1 is a perspective view of a mixer suitable for use with the present invention.
Figure 2 is a top plan view of the mixer of Figure 1.
Figure 3 is a cross-sectional view of a portion of the mixer depicted in Figure 1, seen along the line 3'-3" that appears in Figure 1.

### Detailed Description of the Invention

The present invention is useful for cooling any of a wide variety of food products, especially products that are formable. A product is considered to be formable if it is sufficiently viscous that it can maintain for at least one second any particular shape into which it has been formed (e.g. formed by hand or by mechanical equipment) and if it is also capable of being moved or reconfigured into a different shape and, having been moved or reconfigured, then maintains that different shape for at least one second. As used herein, formable products also have to be able to be penetrated by streams of liquid directed at them or into them. Examples of formable products include ground meat (which includes mixtures of ground meat with other ingredients), and compositions (such as batters) that can be solidified in subsequent processing steps (such as baking) to create products such as baked goods, cookies, pet food kibbles, and the like.

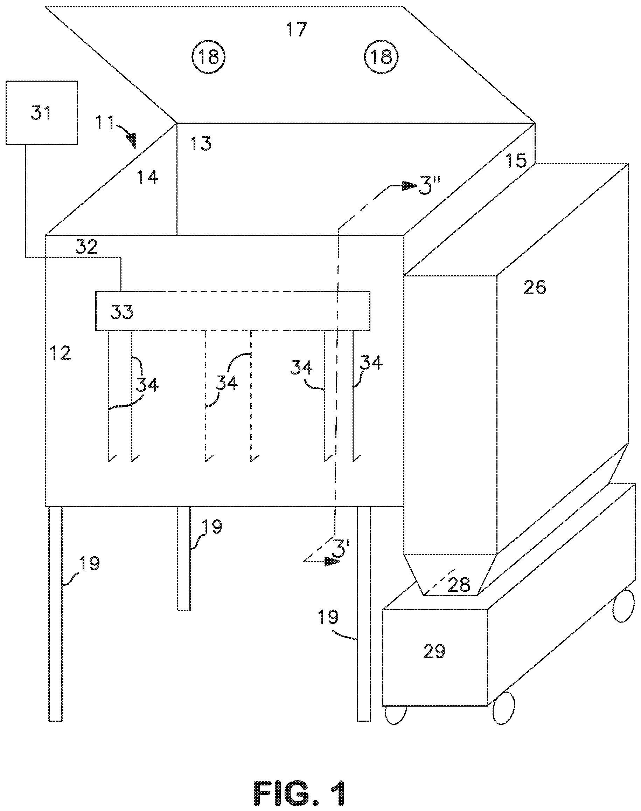

The present invention is advantageously employed using equipment that can receive and hold a quantity of the food product to be cooled, in which there is at least one impeller inside the equipment which can move the product within the equipment. One example of such equipment is illustrated in Figure 1, wherein mixer 11 comprises side walls 12 and 13, end walls 14 and 15, and bottom 16, all of which are sealed to each other to form an enclosure. Lid 17 is hingedly attached to one wall, such as wall 13 as shown, so that lid 17 can be closed over product within mixer 11 and can be raised to permit access to the interior of mixer 11. Lid 17 includes one or more vents which can be opened or sealed, to permit vapor to be drawn out of the interior of mixer 11. The mixer 11 is supported on legs 19. Discharge hopper 26 is a receptacle that can receive cooled product from the interior of mixer 11, through doorway 27 which is closed during the cooling operation and which is opened when cooling is completed. Discharge hopper 26 holds cooled product that is fed there from mixer 11, until doorway 28 in the bottom of discharge hopper 26 is opened at which point cooled product passes out through doorway 28 into a receptacle such as carrier 29 in which the cooled product can be held and moved to another location for further processing.

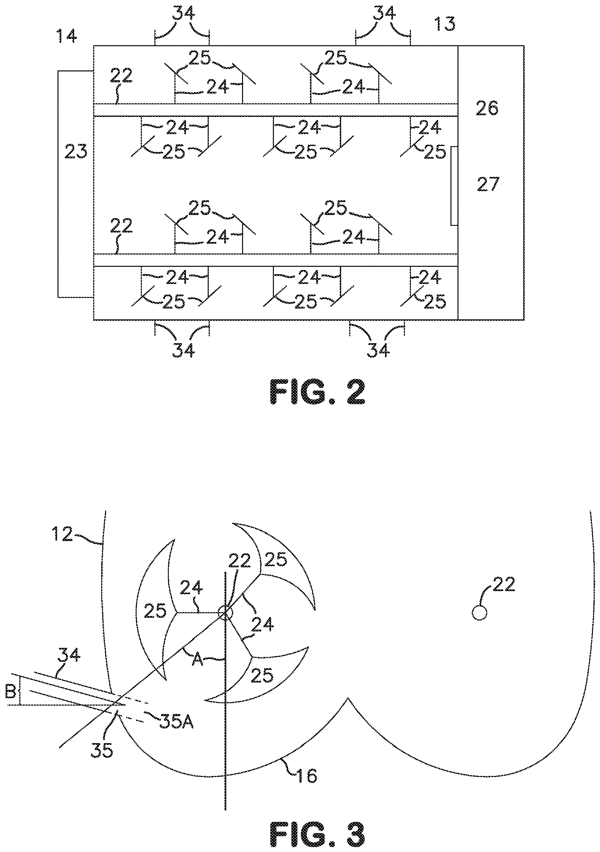

Referring to Figure 2, a pair of impellers are shown. The invention can be practiced with embodiments having one impeller, or more than two impellers. Each impeller includes an axle 22 which is mounted in conventional manner in each end wall so that each impeller can be rotated around its axle. Drive 23 includes a motor and suitable connections from the motor to the axles 22 to enable the motor to rotate each axle. Drive 23 also includes suitable controls to enable an operator to stop and start the rotation of the impellers and to regulate the speed at which the impellers rotate.

The impellers also include blades 25 which, in operation, contact the food product and urge it in a direction generally parallel to the axles 22 while also mixing the product. In Figure 2, each blade 25 is attached to an axle by a radial arm 24, and the blades 25 are angled relative to the sides of the mixer 11. While one embodiment of blades is illustrated in Figure 2, it will be understood that other configurations are also known and useable, such as ribbon-type and screw-type impellers and drives, to move the food product along the length of the mixer 11.

The nozzle openings can be provided on only one side of the mixer 11, to appear as shown in Figure 1, or they can be provided on both sides of the mixer 11, as shown in Figure 2.

Figure 3 illustrates an end-on cross-sectional view of mixer 11 showing one set of blades 25 and radial arms 24. It is preferred that the edges of blades 25 that are farthest from axle 22 are near, but not touching, the inner edge of side wall 12. A nozzle opening 35, which is at the open end of a cryogen feed line 34, is situated flush with the inner surface of wall 12, or (as illustrated by phantom lines 35A) can be situated within the interior of mixer 11 provided that nozzle opening 35 does not contact blades 25 or any other part of the impeller.

Figure 3 also illustrates the preferred position of each nozzle opening 35 relative to the mixer. That is, each nozzle opening 35 is preferably located so that the angle A between a vertical radius from the axle 22 of the impeller that is closest to the nozzle opening 35, and the radius extending to the nozzle opening 35 from the axle 22 of the impeller that is closest to the nozzle opening 35, is preferably from 50 to 60 degrees. In addition, each nozzle opening 35 should be oriented so that the angle B between the central axis of the nozzle opening and a horizontal line passing through the nozzle opening is preferably from 12 to 20 degrees.

Referring again to Figure 1, each cryogen feed line 34 is open at one end as nozzle opening 35 and is connected at its other end to plenum 33 which is connected via line 32 to a source 31 of liquid cryogen such as an insulated tank with suitable control valves and meters. The liquid cryogen in the tank or other source 31 is typically at a pressure of 308.2 to 342.6 kPa (30 to 35 psig) but can be as low as 273.t kPa (25 psig) and as high as 515.0 kPa (60 psig). Preferred cryogen includes liquid nitrogen. The liquid nitrogen can comprise 100% liquid (that is, with no vapor fraction present), the benefits of the present invention can be realized when some of the cryogen is in the vapor phase together with the balance being liquid. However, at least 70 % of the cryogen by weight should be liquid, and preferably at least 90 % and more preferably at least 95%, by weight should be liquid, as the benefits of the present invention generally increase with higher liquid content of the cryogen that is fed into the mixer 11.

While Figure 1 illustrates one plenum and all of the feed lines extending from the one plenum to the mixer, it will be recognized (and described below) that larger numbers of feed lines, some of which extend from second or additional plenums, can be utilized for larger capacity mixers, for providing higher overall refrigeration to the food product, or for providing refrigeration in a shorter period of time, though still subject to the surprising operational limits to the amount of cryogen injected per nozzle that have been determined to be necessary within the present invention.

Reduction of the liquid portion (fraction) of the cryogen that is fed out of the nozzle openings can be avoided by insulating the lines 32 and 34 and plenum 33, and also by minimizing the pressure drop encountered by the cryogen between its source 31 and the nozzle openings 35. Pressure drop can be minimized by minimizing the number of bends in the lines 32 and 34 and by employing piping and nozzle openings that are not excessively constricting and that preferably minimize restrictions to flow. Inner diameters for the lines 32 on the order of 1 to 4 inches, and on the order of half an inch for the lines 34, are satisfactory. Preferred pressure drop between the cryogen source 31 and the nozzle openings 35 is no more than 68.9 kPa (10 psi (pounds per square inch)) and preferably no more than 35.5 kPa (5 psi).

In operation, formable food product to be cooled is placed in the mixer and the lid should then be closed. The impellers are turned on. The flow of liquid cryogen is also initiated, immediately or after some period of food product mixing or blending, from the source through the plenum and the individual feed lines and out of each nozzle opening into the food product in the mixer. The food product is in direct contact with the nozzle openings, so that liquid cryogen emerges out of the nozzle openings directly into the formable food product, wherein the liquid cryogen cools the food product by virtue of its low temperature, the liquid cryogen vaporizes in contact with the food product to provide refrigeration via the heat of vaporization, and the resulting cryogen vapor cools by virtue of its still-low temperature. The liquid cryogen just before it emerges from the nozzle openings is typically at a temperature on the order of -195.6 to -156.7 °C (-320 F to -250 F).

It has surprisingly been determined that unexpectedly good efficiency of cooling is obtained by limiting the flow rate of cryogen from each nozzle opening into the food product in the mixer, and by not exceeding a maximum amount of refrigeration obtained via each nozzle opening from the cryogen that is fed from each nozzle opening. The maximum expressed as refrigeration is up to 2004.7 kJ (1900 BTUs) (preferably up to 1582,7 kJ (1,500)) of refrigeration per minute per nozzle. Alternatively, adhering to a maximum amount of cryogen from each nozzle, as described more below, is likewise surprising and also accomplishes the results described herein. These findings are opposite to the conventional expectation in this field that increased cooling must be obtained by increasing the cooling rate and cryogen flow rate at each nozzle. This finding also enables the operator to obtain efficient, substantially uniform, and rapid cooling while avoiding freezing of the food product. That is, the food product remains formable as defined herein, even as cooling of the food product continues and its temperature decreases.

In general, meat mixing is an application with uniquely high refrigeration rate requirements to remove significant heat (on the order of 52755 to 105510+ kJ (50,000 to 100,000+ BTUs)) often from several tons of meat in a short period of time (several minutes). Thus, the use of a cryogen such as liquid nitrogen in direct contact with the meat is generally advantageous. At the same time, this invention has found that limiting the liquid nitrogen refrigeration rate per injection nozzle is highly advantageous from the point of view of cryogen efficiency and food product quality. Efficiency here refers to the amount of cooling obtained per amount of cryogen fed into the mixer for contact with the food product being cooled. The present invention provides an unexpectedly high efficiency compared to prior techniques using liquid cryogen, even where the prior techniques use liquid nitrogen as the cryogen.

This outcome is produced by a combination of operating conditions. The impeller is operated at a rate that moves the food product past each nozzle opening rapidly enough to avoid freezing of the food product by its contact with the liquid cryogen from the nozzle opening. Typically this means that the food product moves past each nozzle opening at a rate on the order of 0.2 to 3.0 meter/second, with higher rates preferred. The desired rate of movement of the food product can be achieved by controlling the rate at which the impeller rotates. Impellers such as those in typical commercial use would be rotated at rates on the order of 3 to 45 rpm (rotations per minute), again with higher rates preferred although attention must be given to avoiding rates that are so high that the physical integrity or the quality of the food product is damaged. Effective rates of movement of the food product can readily be determined by evaluating whether or not the food product undergoes any stiffening due to the onset of freezing, under a given set of conditions of cryogen flow rate out of the nozzle opening and rate of movement of the food product past the nozzle opening.

In addition, another unexpected operating condition to attain the surprising improvement in cooling efficiency by the present invention is to limit the refrigeration that is provided out of each nozzle opening. This is provided by not exceeding a maximum of 2004.7 kJ (1900 BTUs) (preferably a maximum of 1582,7 kJ (1500 BTUs) of refrigeration to the formable food product per minute from the cryogen liquid delivered from each nozzle opening.

The heat to be removed during cooling of the food product in the mixer as the food product goes from thermodynamic state 1 to 2 is Δ **H_{f}** = **H_{f2} (T₂, x₂)** - **H_{f1}(T₁, x₁)** with units of BTU/lb or kJ/kg, where **H_{f}** is the enthalpy of the food product, T is the temperature of the food product, and x is the phase or frozen fraction of the food product. The total amount of refrigeration required to be delivered to the food product per batch (or during the cooling residence time of the food product in the vessel during continuous operation) is Δ**H_{f} m_{f}** / Δ**t** with units of BTU/min or kJ/min, where **m_{f}** is the mass of the food product in the vessel, and Δ**t** is the cooling batch time for batch operation (or cooling residence time in the vessel for continuous operation). Refrigeration actually delivered into the food product by the cryogenic fluid directly injected inside the vessel to contact the food product is **m_{c} η_{c}** with units of BTU/min or kJ/min, where **m_{c}** is the mass flow rate of the cryogenic fluid (kg/min or lb/min), and **η_{c}** is the cryogen refrigeration utilization efficiency (BTU/lb or kJ/kg).

The present invention has determined that this is generally achieved by not exceeding a flow rate of cryogen liquid into the food product in the range of 2.3 to 13.6 kg (5 to 30 pounds) of cryogen per minute per nozzle, preferably 2.3 to 11.3 kg (5 to 25 pounds) of cryogen/minute/nozzle, typically on the order of only about 4.5 to 9.1 (10 to 20 pounds) of cryogen/minute/nozzle.

The high efficiency that is achieved by the present invention is also enabled by providing a high liquid content (fraction) of the liquid cryogen that is fed out of the nozzle openings, in accordance with the guidance that is described hereinabove. Liquid fractions of at least 90 wt.% are to be preferred.

The number of nozzle openings (as well as the number of feed lines feeding liquid cryogen to the nozzle openings, and the number of plenums associated with the feed lines) will be determined by the overall desired amount of cooling to be provided to the quantity of food product being cooled, and by the length of time within which the cooling is to be achieved.

As one typical example, in a commercial 1814.4 kg (4000-pound) mixer, satisfactory high-efficiency cooling is provided in a range up to 10 minutes to provide heat removal of 57.3 kJ/kg (25 BTU/pound) of food product, by adjusting and balancing the cryogen flow rates out of each nozzle opening, the number of nozzle openings, and the liquid content of the cryogen that is fed into the food product, and providing cryogen liquid as described herein through the nozzle openings into the food product.

A preferred overall sequence of steps is the following:

### Mixing only (optional)

Some food products require a mixing only period to mix the various ingredients that have been added to the mixer. Typical times are 1 to 3 minutes. During this period, inert nontoxic gas such as gaseous nitrogen may optionally be injected through the nozzle openings periodically to keep them un-blocked. Typically, this gas would be injected through one plenum for 5 seconds, followed by 5 seconds through the second plenum, and so on. All the manifolds will be injected through at least once and the cycle may be continued multiple times.

### Gaseous nitrogen pre-purging (+ mixing)

Prior to the liquid cryogen injection, gas such as nitrogen is injected through all of the nozzle openings to clear out any food product that may be present in the nozzle openings. Each manifold should be injected with this gas at least once and preferably twice. Each injection should be at least 5 seconds and preferably 10 seconds. Up to 2 manifolds at one time can be injected with gas. Typically, the total time for this pre-purge is between 20 to 40 seconds.

### Liquid nitrogen injection (+ mixing)

The liquid nitrogen injection period preferably includes alternating injections of liquid nitrogen and of gaseous nitrogen injection through each manifold. Typically, this period can be between 3 to 15 minutes. The total period consists of multiple cycles. Each cycle consists of a period of liquid nitrogen injection followed by a period of gaseous nitrogen injection. Typically, each cycle is 30 to 60 seconds in duration. Typically, the liquid nitrogen injection duration is 50% to 90% of the total cycle time. As an example, an injection cycle of 60 seconds can consist of 45 seconds of liquid nitrogen injection followed by 15 seconds of gas nitrogen injection.

### Gaseous nitrogen post-purging (+mixing) 30 secs to 1.5 mins

After the liquid nitrogen injection, gaseous nitrogen is injected through the manifolds to clear out the nozzles and warm up the nozzle openings and the surrounding mixer wall (warm, that is, relative to the temperature of cryogenic liquid) to prevent food product from freezing and sticking to them. This period also gives time for the food product to be well mixed so as to ensure more uniform final cold product temperatures. Typically, the duration of this period is between 30 to 90 seconds. Each manifold should be injected in this step with gaseous nitrogen at least once and preferably twice. Each injection should be at least 5 seconds and preferably 10 seconds. Up to 2 manifolds at one time can be injected with gas.

### Sanitation considerations

Periodically, such as at the end of a production shift or workday, the manifolds can be cleaned and sanitized from the inside. This can be carried out by closing all valves feeding liquid cryogen and inert nontoxic gas (as described above) into the mixer. Then, preferably, compressed air is blown for at least 2 minutes through each manifold to ensure that all food product is removed from the nozzles. Next, hot water is flowed through each manifold and feed line to each nozzle opening, followed by detergent solution and finally sanitizer solution. As shown in Figure 1, the manifolds are self-draining, i.e. all liquid in the manifold flows into the feed lines and out of the nozzle openings and no liquid remains collected at any location in the manifold. This is important so that no liquid remains in the manifold which could freeze when liquid nitrogen or other liquid cryogen is flowed through the manifold.

### Sanitation considerations

Periodically, such as at the end of a production shift or workday, the manifolds can be cleaned and sanitized from the inside. This can be carried out by closing all valves feeding liquid cryogen and inert nontoxic gas (as described above) into the mixer. Then, preferably, compressed air is blown for at least 2 minutes through each manifold to ensure that all food product is removed from the nozzles. Next, hot water is flowed through each manifold and feed line to each nozzle opening, followed by detergent solution and finally sanitizer solution. As shown in Figure 1, the manifolds are self-draining, i.e. all liquid in the manifold flows into the feed lines and out of the nozzle openings and no liquid remains collected at any location in the manifold. This is important so that no liquid remains in the manifold which could freeze when liquid nitrogen or other liquid cryogen is flowed through the manifold.

## Claims

1. A method for providing a desired amount of cooling to a quantity of food product in a vessel within a given period of time, comprising:
(A) feeding cryogenic liquid which is not carbon dioxide from a cryogen source to a plurality of nozzle openings and out of the plurality of nozzle openings into a vessel directly into a formable mass of food product in the vessel at a flow rate effective to provide from each nozzle up to 2004.7 kJ (1900 BTUs) of refrigeration to the formable mass of food product per minute from the cryogenic liquid delivered from each nozzle, while an impeller is rotated at a rate of 3 to 45 rpm (rotations per minute) to move the food product past the nozzle openings, wherein each nozzle opening is in direct contact with the food product and is at the interior surface of the vessel or is between the interior surface and the path of the impeller, wherein the pressure drop encountered by the cryogenic liquid between the cryogen source and the nozzle openings is up to 69.0 kPa (10 pounds per square inch) and wherein the number of nozzle openings is determined by the overall desired amount of cooling to be provided to the quantity of food product being cooled, and by the length of time within which the cooling is to be achieved.; and
(B) moving the formable mass of food product past each nozzle opening at a rate of 0.2 to 3.0 meter per second so that the mass of food product remains formable as it is being cooled by contact with the cryogenic liquid.

2. A method according to claim 1 wherein intermittently cleaning fluid is fed into feed lines upstream from each nozzle opening, is passed through said feed lines and through and out of said nozzle openings into said vessel, and is removed from said vessel.

3. A method according to claim 1 wherein intermittently the flow of cryogenic liquid out of the nozzles is interrupted by flowing nontoxic gas out of the nozzles into the food product.

4. The method according to any one of the preceding claims, wherein in step (A) the cryogenic liquid is fed directly into the formable mass of food product at a flow rate effective to provide from each nozzle not greater than 13.6 kg (30 pounds) of cryogenic liquid per minute per nozzle.

## Patentansprüche

1. Verfahren zum Bereitstellen einer gewünschten Menge an Kühlung an eine Menge eines Lebensmittelprodukts in einem Gefäß innerhalb eines gegebenen Zeitraums, umfassend:
(A) Zuführen von kryogener Flüssigkeit, die nicht Kohlendioxid ist, von einer Kryogenquelle zu einer Vielzahl von Düsenöffnungen und aus der Vielzahl von Düsenöffnungen heraus in ein Gefäß direkt in eine formbare Masse eines Lebensmittelprodukts in dem Gefäß mit einer Strömungsrate, die wirksam ist, um von jeder Düse bis zu 2004,7 kJ (1900 BTUs) an Kälte der formbaren Masse des Lebensmittelprodukts pro Minute aus der kryogenen Flüssigkeit, die von jeder Düse geliefert wird, bereitzustellen, während ein Flügelrad bei einer Geschwindigkeit von 3 bis 45 rpm (Umdrehungen pro Minute) gedreht wird, um das Lebensmittelprodukt an den Düsenöffnungen vorbei zu bewegen, wobei jede Düsenöffnung in direktem Kontakt mit dem Lebensmittelprodukt steht und sich an der Innenoberfläche des Gefäßes befindet oder sich zwischen der Innenoberfläche und dem Pfad des Flügelrads befindet, wobei der Druckabfall, den die kryogene Flüssigkeit zwischen der Kryogenquelle und den Düsenöffnungen erfährt, bis zu 69,0 kPa (10 Pfund pro Quadratzoll) beträgt, und wobei die Anzahl der Düsenöffnungen durch die gesamte gewünschte Menge an Kühlung, die der Menge an gekühltem Lebensmittelprodukt bereitzustellen ist, und durch die Zeitdauer, innerhalb der die Kühlung zu erreichen ist, bestimmt wird; und
(B) Bewegen der formbaren Masse des Lebensmittelprodukts an jeder Düsenöffnung vorbei bei einer Geschwindigkeit von 0,2 bis 3,0 Meter pro Sekunde, so dass die Masse des Lebensmittelprodukts formbar bleibt, wenn sie durch Kontakt mit der kryogenen Flüssigkeit gekühlt wird.

2. Verfahren nach Anspruch 1, wobei zwischenzeitlich Reinigungsfluid stromaufwärts von jeder Düsenöffnung in Zufuhrleitungen eingespeist wird, durch die Zufuhrleitungen und durch die Düsenöffnungen und aus diesen heraus in das Gefäß geleitet wird und aus dem Gefäß entfernt wird.

3. Verfahren nach Anspruch 1, wobei der Strom der kryogenen Flüssigkeit aus den Düsen zwischenzeitlich durch das Strömen von nicht-toxischem Gas aus den Düsen in das Lebensmittelprodukt unterbrochen wird.

4. Verfahren nach einem der vorstehenden Ansprüche, wobei in Schritt (A) die kryogene Flüssigkeit direkt in die formbare Masse des Lebensmittelprodukts bei einer Strömungsrate eingespeist wird, die wirksam ist, um aus jeder Düse nicht mehr als 13,6 kg (30 Pfund) kryogene Flüssigkeit pro Minute pro Düse bereitzustellen.

## Revendications

1. Procédé pour fournir une quantité souhaitée de refroidissement à une quantité de produit alimentaire dans un récipient au cours d'une période de temps donnée, comprenant :
(A) l'alimentation d'un liquide cryogénique qui n'est pas du dioxyde de carbone à partir d'une source de cryogène vers une pluralité d'ouvertures de buse et à l'extérieur de la pluralité d'ouvertures de buse dans un récipient directement dans une masse formable de produit alimentaire dans le récipient à un débit efficace pour fournir à partir de chaque buse jusqu'à 2004,7 kJ (1900 BTU) de réfrigération à la masse formable de produit alimentaire par minute à partir du liquide cryogénique libéré de chaque buse, alors qu'une hélice est mise en rotation à une vitesse de 3 à 45 tr/min (rotations par minute) pour déplacer le produit alimentaire au-delà des ouvertures de buse, dans lequel chaque ouverture de buse est en contact direct avec le produit alimentaire et est au niveau de la surface intérieure du récipient ou est entre la surface intérieure et la trajectoire de l'hélice, dans lequel la perte de charge rencontrée par le liquide cryogénique entre la source de cryogène et les ouvertures de buse va jusqu'à 69,0 kPa (10 livres par pouce carré) et dans lequel le nombre d'ouvertures de buse est déterminé par la quantité globale souhaitée de refroidissement à fournir à la quantité de produit alimentaire étant refroidie, et par la durée au cours de laquelle le refroidissement doit être accompli ; et
(B) le déplacement de la masse formable de produit alimentaire au-delà de chaque ouverture de buse à une vitesse de 0,2 à 3,0 mètres par seconde de sorte que la masse de produit alimentaire demeure formable à mesure qu'elle est refroidie par un contact avec le liquide cryogénique.

2. Procédé selon la revendication 1 dans lequel de façon intermittente un fluide de nettoyage est alimenté dans des lignes d'alimentation en amont de chaque ouverture de buse, est passé à travers lesdites lignes d'alimentation et au travers et hors desdites ouvertures de buse dans ledit récipient, et est éliminé dudit récipient.

3. Procédé selon la revendication 1 dans lequel de façon intermittente l'écoulement de liquide cryogénique à l'extérieur des buses est interrompu par un écoulement de gaz non toxique à l'extérieur des buses vers le produit alimentaire.

4. Procédé selon l'une quelconque des revendications précédentes, dans lequel à l'étape (A) le liquide cryogénique est alimenté directement dans la masse formable de produit alimentaire à un débit efficace pour fournir à partir de chaque buse pas plus de 13,6 kg (30 livres) de liquide cryogénique par minute par buse.
